# EUROPEAN PATENT APPLICATION

(11) **EP 4 685 373 A1**
(43) Date of publication of application: **28.01.2026**
(21) Application number: 25191114.5
(22) Date of filing: 22.07.2025
(51) Int. Cl.: F16K 31/00, F24D 19/00, F24F 11/41

(54) **ANTI-FREEZE VALVE**

(30) Priority: 23.07.2024 IT 202400017017
(71) Applicant: Carlo Poletti S.r.l., 28024 Gozzano (NO) (IT)
(72) Inventor: POLETTI, Stefano, 28024 Gozzano (NO) (IT)
(74) Representative: Buzzi, Notaro & Antonielli d'Oulx S.p.A.

(57) **Abstract**

The cartridge (5) of the anti-freeze valve comprises a container (6) having a lower tubular appendage (7) forming a bottom outlet (8), and an annular lid (9) coaxially and sealingly fixed on the container (6) and having an upper tubular appendage (13) sealingly engaged within an opening (4) of the valve body (1). An internal goblet (15) is vertically slidable within the container (6) and has a lower appendage (16) axially slidable within the tubular appendage (7) of the container (6). An axial thrust spring (19) is interposed between the container (6) and the internal goblet (15) and tends to urge the internal goblet (15) upwards. The thermostatic element (21) of the anti-freeze valve comprises a body containing a thermosensitive material having a lower portion (22) housed in the goblet (15) and resting against the lid (9), and an upper portion (23) passing through the upper tubular appendage (13) of the lid (9) and protruding into the valve body (1).

## Description

### Field of the Invention

The present invention relates to anti-freeze valves used in water pipes exposed to the atmosphere, in particular for heat pumps equipped with an outdoor unit.

### Background Art

Anti-freeze valves serve to prevent water from freezing inside the pipe connecting the indoor and outdoor units of the system when the winter ambient temperature to which the pipe is exposed falls below a value between 4°C and 2°C, which could compromise the operation of the system or even cause the pipe to burst.

The anti-freeze valve is typically equipped with a thermostatic actuator that activates at a temperature close to 3°C, opening a drain to allow the water to drip out of the pipe, thereby preventing freezing inside it.

Conventionally, the anti-freeze valve comprises a body equipped with inlet and outlet fittings connected to the water pipe and, between them, a cartridge containing the thermostatic element, which includes a material sensitive to the temperature of the water flowing between the inlet fitting and the outlet fitting. The cartridge is equipped with a bottom outlet, with which a shutter cooperates, movable between a closed position and an open position of the bottom outlet in response to the state of the thermostatic element: more specifically, contraction of the thermosensitive material of the thermostatic element caused by a drop in temperature to around 3°C results in the opening of the bottom outlet and the consequent dripping of water from the valve.

This principle is used in many anti-freeze valves currently on the market, all of which are characterized by a relatively complex and bulky structure due to a significant number of components. A resulting drawback is that, when the valve is installed near the ground (e.g., at a distance of no more than 15-20 cm), the space available for water discharge from the cartridge may be limited or even insufficient to prevent ice buildup and the consequent blockage of the anti-freeze valve.

### Summary of the Invention

The object of the present invention is to solve the aforementioned problem in a particularly simple, reliable, and cost-effective manner.

According to the invention, this purpose is achieved, as defined in claim 1, in that the cartridge includes a container having a lower tubular appendage that forms the bottom outlet of the anti-freeze valve, and an annular lid coaxially and sealingly fixed on the container and having an upper tubular appendage sealingly engaged within an opening of the valve body. An internal goblet is vertically slidable inside the container and has a lower appendage axially slidable within the tubular appendage of the container. An axial thrust spring is interposed between the container and the internal goblet and tends to push the goblet upwards. The thermostatic element comprises a brass body containing a thermosensitive material and has a lower portion housed in the goblet and resting against the lid of the cartridge container, and an upper portion passing through the upper tubular appendage of the container lid and protruding into the valve body.

The arrangement of the anti-freeze valve with the essential components listed above is such that the thermostatic element normally keeps the goblet in a lowered position, against the action of the thrust spring, in which the lower appendage of the goblet sealingly closes the tubular appendage of the container, thereby closing the bottom outlet of the anti-freeze valve. When the temperature to which the thermosensitive material body is exposed drops below a threshold value (typically around 3°C), the thermostatic element contracts and allows the goblet to be lifted, under the action of the thrust spring, so as to remove the sealing engagement between the lower appendage of the goblet and the tubular appendage of the container, thereby opening the bottom outlet of the anti-freeze valve.

Thanks to this solution, the anti-freeze valve according to the invention consists of a minimum number of components, and its cartridge has a particularly limited vertical extension, which allows its installation even very close to the ground without the risk of ice buildup and resulting blockage of the anti-freeze valve.

In one embodiment of the invention, the lower appendage of the goblet is provided with an external O-ring that creates a radial seal with the tubular appendage of the container when the anti-freeze valve is in the closed condition.

Conveniently, the thermostatic element has an axial recess containing a sliding pin resting against the lower appendage of the goblet and movable upwards to allow the goblet to rise, under the action of the thrust spring, as a result of contraction of the thermosensitive material of the thermostatic element.

### Brief Description of the Drawings

The invention will now be described in detail with reference to the accompanying drawings, provided purely by way of non-limiting example, in which:
- Figure 1 is a side elevation view showing one embodiment of the anti-freeze valve according to the invention,
- Figure 2 is a vertical sectional view of the anti-freeze valve according to the invention shown in the closed condition, and
- Figure 3 is a view similar to Figure 2 showing the anti-freeze valve in the open position.

### Detailed Description of the Invention

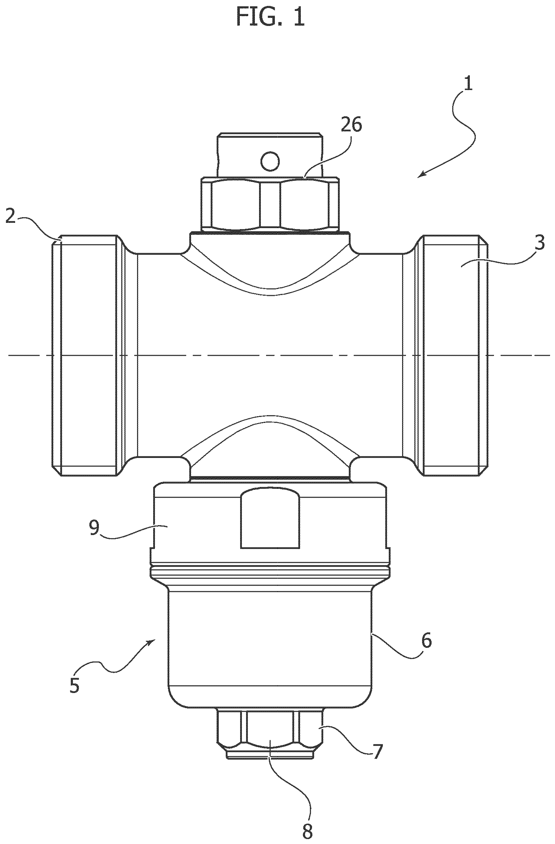

Referring initially to Figure 1, the anti-freeze valve according to the invention comprises a valve body (1) having an inlet fitting (2) and an outlet fitting (3) connectable to a water pipe, for example the pipe connecting the indoor and outdoor units of a heat pump. In use, the anti-freeze valve is exposed to the outside and therefore to ambient temperature.

The valve body (1) of the anti-freeze valve is provided inferiorly, between the inlet fitting (2) and the outlet fitting (3), with a threaded hole (4) into which a cartridge (5) is screwed. This cartridge is arranged transversely and underneath the valve body (1) and contains a thermostatic element sensitive to the temperature of the water flowing, in use, between the inlet fitting (2) and the outlet fitting (3).

The cartridge (5) has a bottom outlet (8), described in detail below, with which a shutter cooperates, movable between a closed position and an open position of the bottom outlet, in response to a state of the thermostatic element, in such a way that a temperature drop to around 3°C causes the opening of the bottom outlet (8) and the dripping of water from the cartridge (5).

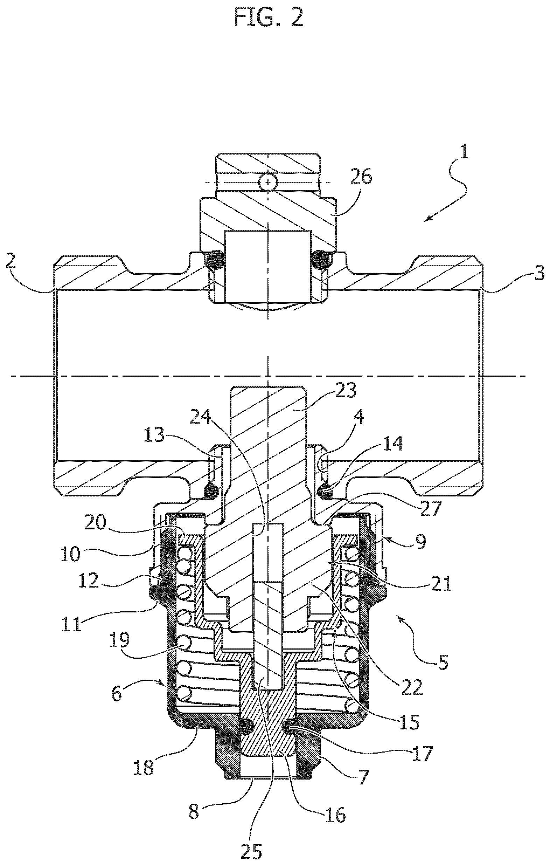

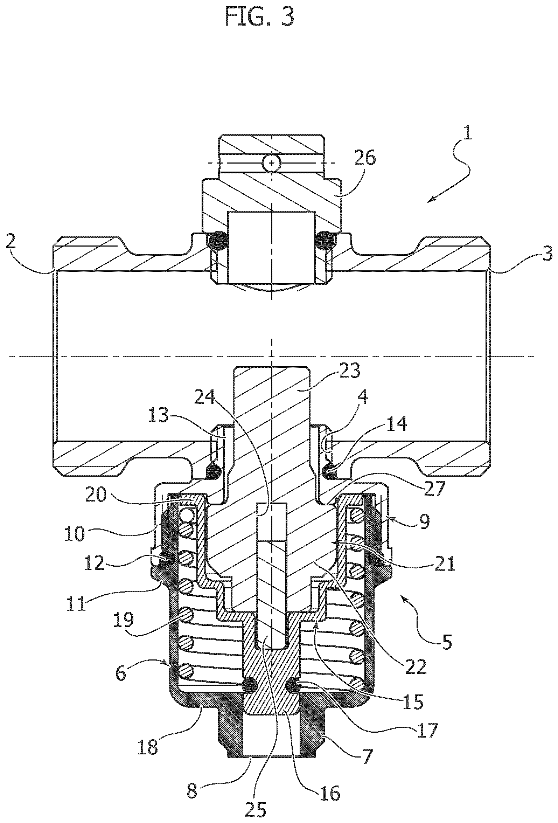

As shown in Figures 2 and 3, the cartridge (5) is composed of a reduced number of components and therefore has a limited vertical extension: it comprises an outer container (6), the bottom wall (18) of which has a centrally located lower tubular appendage (7) forming the bottom outlet (8), and an annular lid (9) coaxially and sealingly fixed on the container (6). More specifically, the lid (9) has an axial shroud (10) engaged with an external annular flange (11) of the container (6), sealed by an O-ring (12).

The lid (9) is provided with an externally threaded upper tubular appendage (13) screwed sealingly, via an O-ring (14), into the threaded hole (4) of the valve body (1).

Inside the container (6), a vertically slidable internal goblet (15) is inserted. The goblet has a lower cylindrical appendage (16) axially slidable within the tubular appendage (7) of the container (6). The lower appendage (16) is equipped with an O-ring (17), whose function will be clarified below.

Reference numeral (19) indicates a helical axial thrust spring interposed between the bottom wall (18) of the container (6) and an external upper annular flange (20) of the internal goblet (15), acting so as to push the goblet (15) upwards.

The thermostatic element of the anti-freeze valve is indicated by (21) and consists of a brass body containing a thermosensitive material capable of contracting at low temperatures, for example a wax. This thermostatic element may be of the type marketed by the French company Vernet SAS under the designation ELG083-PM.

The brass body containing the thermosensitive material (21) has a lower portion (22) housed in the upper part of the goblet (15), and an upper portion (23) passing through the upper tubular appendage (13) of the lid (9) and protruding into the valve body (1) through the hole (4).

The upper portion (23) of the brass body containing the thermosensitive material (21) has a radial annular shoulder (27) resting axially against the lid (9) at the upper tubular appendage (13).

The lower portion (22) of the brass body containing the thermosensitive material (21) has, at its center, a downward-facing axial recess (24) within which a sliding pin (25) is inserted. This pin projects downward and rests against the lower appendage (16) of the goblet (15).

Reference numeral (26) indicates a vacuum-breaking cap, of a known type, applied to the valve body (1) on the side opposite the cartridge (5).

The operation of the anti-freeze valve according to the invention is as follows.

In the closed condition shown in Figure 2, corresponding to a temperature above approximately 3-4°C of the water flowing through the valve body (1) between the inlet fitting (2) and the outlet fitting (3), the brass body containing the thermosensitive material (21) is in a relatively expanded state and keeps the pin (25), and thus the goblet (15), in a lowered position, against the action of the thrust spring (19). In this position, the lower appendage (16) of the goblet (15) sealingly closes the tubular appendage (7) of the container (6) by means of the O-ring (17), which is kept in radial sealing contact with the inner wall of the tubular appendage (7). The bottom outlet (8) is thus kept closed.

When the water temperature drops below 4-3°C, the brass body containing the thermosensitive material (21) contracts and allows the pin (25) to move upward, retreating into the recess (24), and the goblet (15), pushed by the spring (19), is lifted into the position shown in Figure 3. The sealing engagement between the lower appendage (16) of the goblet (15) and the lower tubular appendage (7) of the container (6) is thus removed, and the bottom outlet (8) opens, allowing water to drip out of the anti-freeze valve.

Naturally, construction details and embodiments may be widely varied with respect to what has been described and illustrated, without thereby departing from the scope of the present invention as defined in the claims that follow.

Thus, for example, the pin (25) could be omitted and replaced by an integral appendage of similar shape of the brass body containing the thermosensitive material (21).

## Claims

1. Anti-freeze valve comprising a valve body (1) having an inlet fitting (2) and an outlet fitting (3) connectable to a water pipe, and a cartridge (5) arranged between said inlet and outlet fittings and containing a thermostatic element (21) sensitive to the temperature of the water that flows between the inlet fitting and the outlet fitting, said cartridge (5) being equipped with a bottom outlet (8) cooperating with a shutter (16) movable between a closed position and an open position of the bottom outlet (8) in response to a state of the thermostatic element (21) in such a way that a decrease of the temperature to which it is exposed to around 3°C causes the opening of the bottom outlet (8), **characterized by** the fact that the cartridge (5) includes:
- a container (6) having a lower tubular appendage (7) which forms said bottom outlet (8) and an annular lid (9) coaxially fixed on said container (6) and having an upper tubular appendage (13) sealingly engaged within an opening (4) of the body (1) of the valve,
- an internal goblet (15) sliding vertically within the container (6) and having a lower appendage (16) inserted in an axially sliding manner within said tubular appendage (7) of the container (6),
- an axial thrust spring (19) placed between the container (6) and the internal goblet (15) and tending to urge said internal goblet (15) upwards,
and by the fact that the thermostatic element (21) comprises a body containing a thermosensitive material having a lower portion (22) housed in the goblet (15) and resting against said lid (9) and an upper portion (23) which passes through said upper tubular appendage (13) of the cover (9) and protrudes into said valve body (1),
the arrangement being such that said thermostatic element (21) normally keeps said goblet (15) in a lowered position, against the action of said thrust spring (19), in which the lower appendage (16) of the goblet (15 ) seals the tubular appendage (7) of the container (6) to close said bottom outlet (8), and when the temperature to which said thermostatic element (21) is exposed decreases below a threshold value the thermostatic element (21) contracts and allows the goblet (15) to be lifted, under the action of said thrust spring (19), so as to remove the sealing between the lower appendage (16) of the goblet ( 15) and the tubular appendage (7) of the container (6) so as to open said bottom outlet (8).

2. Anti-freeze valve according to claim 1, **characterized in that** said lower appendage (16) of the goblet (15) is equipped with an external O-ring (17) which creates a radial seal with said tubular appendage (7) of the container (6) in the closed condition of the anti-freeze valve.

3. Anti-freeze valve according to claim 1, **characterized in that** said thermostatic element (21) has an axial recess (24) containing a sliding pin (25) resting against said lower appendage (16) of the goblet (15) and movable upwards to allow the goblet (15) to be lifted, under the action of said thrust spring (19), following contraction of the thermosensitive material of the thermostatic element (21).

4. Anti-freeze valve according to one or more of the previous claims, **characterized in that** the container (6) has an external annular flange (11) on which an axial shroud (10) of said cover (9) sealingly engages.

5. Anti-freeze valve according to one or more of the previous claims, **characterized in that** the thermostatic element (21) rests axially against said cover (9) in correspondence with said upper tubular appendage (13).

6. Antifreeze valve according to one or more of the previous claims, **characterized in that** the valve body (1) is equipped, on the side opposite to said cartridge (5), with a vacuum-breaking cap (26).
